# EUROPÄISCHE PATENTSCHRIFT

(11) **EP 0 479 141 B1**
(45) Veröffentlichungstag und Bekanntmachung des Hinweises auf die Patenterteilung: **21.06.1995**
(21) Anmeldenummer: 91116501.7
(22) Anmeldetag: 27.09.1991
(51) Int. Cl.: D21B 1/32, D21F 11/04

(54) **Verfahren zur Aufbereitung von Fasermaterial sowie Verwendung des Verfahrens**
Method of preparing fibre material and the use of this method
Procédé de préparation de matériaux fibreux et utilisation de ce procédé

(30) Priorität: 04.10.1990 DE 4031310
(43) Veröffentlichungstag der Anmeldung: 08.04.1992
(73) Patentinhaber: Voith Sulzer Stoffaufbereitung GmbH, 88191 Ravensburg (DE)
(72) Erfinder: Maier, Josef, W-7980 Ravensburg (DE); Selder, Harald, W-7981 Schlier (DE)

(56) Entgegenhaltungen:
- EP-A- 0 354 307
- DE-A- 2 908 660
- DE-A- 3 720 618
- DE-C- 3 200 893

## Beschreibung

Die Erfindung bezieht sich auf ein Aufbereitungsverfahren gemäß dem Oberbegriff des Anspruchs 1.

Es ist bekannt, in mehrlagigen Papier- oder Kartonprodukten unterschiedliche Stoffsorten zu verwenden. Dabei kann man sowohl durch Wahl der Rohstoffe, als auch in gezielten Verfahrensschritten der Stoffaufbereitung unterschiedlichen Einfluß auf die später auf der Papiermaschine erzeugten Papier- oder Karton-Qualität nehmen. Auf diese Weise werden - wie an sich bekannt - den Wünschen entsprechend die Eigenschaften des Papier- oder Kartonproduktes gesteuert. Es ist ferner bekannt, daß es Papiersorten gibt, die überhaupt oder zumindest in einer Außenlage nur sehr wenig Füll- und/oder Feinstoffe enthalten sollen. Die vorliegende Erfindung zielt auf die Erzeugung von mehrlagigem Papier oder Karton ab, bei dem eine Qualitätssteigerung dadurch erzielbar ist, daß in einer oder beiden Außenschichten der fertigen Bahn ein möglichst geringer Gehalt an aus dem Rohstoff stammenden Füll- und/oder Feinstoffen vorhanden ist.

Es ist einsichtig, daß bei der Wahl der einzusetzenden Rohstoffe neben der Qualität auch ihre Kosten eine beträchtliche Rolle spielen. Das Bestreben, möglichst preiswerte Rohstoffe zu verwenden, sowie abfallwirtschaftliche Gesichtspunkte führen dazu, daß in vielen Fällen Rohstoffe, z.B. Altpapiere, mit hohem Gehalt an Füll- und Feinstoffen in die Produktion eingesetzt werden sollen. Bekanntlich neigen aber gerade die Füll- und Feinstoffe dazu, dort wo die Papierfasersuspension entwässert wird, also besonders auf der Papiermaschine, gemeinsam mit dem Wasser das Faservlies zu verlassen und damit die Wasserkreisläufe sehr stark mit Feststoffpartikeln anzureichern. Oft ist es nicht möglich, große Abwassermengen in Kauf zu nehmen, da dadurch die Umwelt mehr belastet würde. Um bei Wasserrückführung Betriebsstörungen aufgrund zu hoher Konzentrationen dieser Partikel zu vermeiden, muß ein Teil dieser Stoffe aus dem

Wasser oder aus der Produktion entfernt werden. Dadurch fallen bisher große Mengen von Schlämmen, welche diese Stoffe enthalten, an, wodurch sich beträchtliche Schlamm-Entsorgungsprobleme ergeben.

In der Publikation von Menges: "Faserfraktionierung und -behandlung", erschienen in Das Papier 1984, Seite V 111 bis V 117, wurde vorgeschlagen, Faserstoffe aus den für die Innenlagen bestimmten Kurzfaserfraktionen in die Außenlagen zu bringen, um deren mechanische Festigkeit zu erhöhen. Gerade dort können sie aber leicht auf der Papiermaschine ausgewaschen werden.

In der DE 37 20 618 A1 wird vorgeschlagen, mit Hilfe von Fraktionierschritten den für die Papiererzeugung bestimmten Faserstoff in eine Langfaser- und Kurzfaserfraktion aufzuteilen und die auf der Papiermaschine gebildete Mittellage, zumindest teilweise, aus der Kurzfaserfraktion zu bilden. Dieses bekannte Verfahren enthält aber keinen Verfahrensschritt zur gezielten Trennung in eine feinstoffreiche und eine feinstoffarme Fraktion.

Auch bei der EP 0 354 307 A1 wird eine Trennung der Fraktionen mit Hilfe eines Fraktionators vorgenommen.

Die DE 32 00 893 C1 bringt Beispiele, in denen der Stoff durch Flotation, Sortierer oder Hydrozyklon gereinigt wird, ohne daß dabei auch die Erzeugung unterschiedlicher Stoffqualitäten abgezielt wird und diese unterschiedlichen Stoffqualitäten in verschiedene Lagen des erzeugten Papiers geführt werden sollen.

Gemäß der DE 29 08 660 A1 erfolgt lediglich eine Trennung in eine Kurz- und Langfaserfraktion mit Hilfe eines Fraktionators, um die Fasern spezifisch behandeln zu können. Die in einem Beispiel vorgesehene Wäsche dient lediglich der Entfernung und Deponierung von Farbpartikeln und unerwünschten Schmutzteilchen.

Es ist Aufgabe der Erfindung, ein Verfahren zu schaffen, mit dem es gelingt, Füll- und/oder Feinstoffe so im fertigen Produkt zu halten, daß sie nicht oder zumindest weniger die Wasserkreisläufe belasten, andererseits darf aber die Qualität des Produktes nicht in störender Weise reduziert werden. Diese Aufgabe wird durch die Merkmale des kennzeichnenden Teils des Anspruchs 1 gelöst. Die Unteransprüche beschreiben besonders vorteilhafte Ausführungsformen des Verfahrens, welche unter bestimmten Voraussetzungen durchaus eine Wasser-Kreislaufschließung der Stoffaufbereitung mit der Papiermaschine ermöglichen können.

Mit Hilfe des erfindungsgemäßen Verfahrens wird es inbesondere erreicht, daß die in hohen Konzentrationen nicht erwünschten Fein- und/oder Füllstoffe tendenzmäßig zur Mitte des gebildeten mehrlagigen Blattes hin konzentrierter werden. Dadurch können die erzeugten Papier- und Kartonsorten hohen Qualitätsanforderungen genügen und dennoch einen relativ großen Anteil der Füll- und/oder Feinstoffe enthalten. So lassen sich aus preiswertem Altpapier beispielsweise Hygienepapiere mit angenehmem Griff erzeugen, die eine größere Menge Füll- und/oder Feinstoffe enthalten. Letztere können gegebenenfalls auch zur besseren Saugfähigkeit des Blattes beitragen.

Somit kann die Anlage zur Aufbereitung der Faser-Rohstoffe nach dem erfindungsgemäßen Verfahren mit einem geringeren Anfall von Abfallstoffen arbeiten, wobei gleichzeitig sehr preiswerte Altpapier-Rohstoffe verwendbar sind.

Die Erfindung wird anhand von Zeichnungen erläutert. Dabei zeigen
- Fig. 1: eine schematische Darstellung der wesentlichen Verfahrensschritte
- Fig. 2: eine schematische Darstellung von zur Durchführung einer vorteilhaften Ausführung des Verfahrens benötigten Einzelapparaten
- Fig. 3: Variation des Verfahrens in schematischer Darstellung.

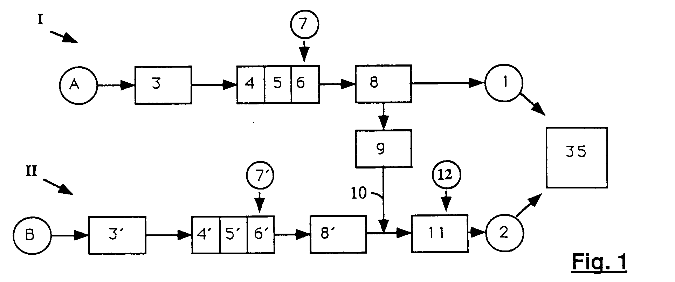

Fig. 1 zeigt, schematisch in Blöcken dargestellt, das erfindungsgemäße Verfahren an einem Beispiel mit zwei Ausgangsstoffen A und B, die in parallel geführten Aufbereitungssträngen I bzw. II behandelt werden, so daß daraus die Sorte 1 bzw. 2 hergestellt wird. Dazu wird sowohl für den Ausgangsstoff A als auch B ein Verfahrensschritt 3 bzw. 3' zur Entfernung der Druckfarben und Störstoffe durchgeführt. Anschließend gelangen die jeweils getrennt geführten Stoffe in eine Kombination aus Zerkleinerung (4 bzw. 4'), Ablösung (5 bzw. 5') sowie Bleiche (6 bzw. 6') mit Chemikalienzufuhr (7 bzw. 7'). Die durch diese Behandlung entfernbar gemachten Störstoffe können anschließend im Verfahrensschritt 8 bzw. 8' ebenfalls noch entfernt werden. Während hierzu bei der Aufbereitung des fein- und/oder füllstoffärmeren Rohstoffes A ein Waschvorgang besonders vorteilhaft, aber auch zusätzlich ein Flotationsverfahren denkbar ist, wird bei der Aufbereitung des Faserstoffes B ein selektives wirksames Verfahren, z.B. Deinkingflotation, verwendet. Die im Aufbereitungsstrang I durchgeführte Feinstoffentfernung 8 führt eine Teilmenge aus diesem Strang heraus, die in Form von Abwasser oder Schlamm vorliegt und einer weiteren Reinigungsstufe 9 zugeleitet wird, welche einerseits die Füll- und Feinstoffe aufkonzentriert und andererseits ein wiederverwendbares Wasser abgibt. Der aufkonzentrierte Schlamm wird nun im Strang II durch die Leitung 10 dem dort sich befindenden Faserstoff zugeführt. Anschließend kann, wie hier dargestellt, in einer Fixierstufe 11 mit Hilfe von Chemikalien 12 die Fixierung der Füll- und Feinstoffe an den Fasern erfolgen. Die auf diese Weise in den Strängen I und II erzeugten Sorten 1 und 2 werden der Papiermaschine 35 zugeleitet, welche einen Stoffauflauf zur Erzeugung von zwei Schichten aufweist.

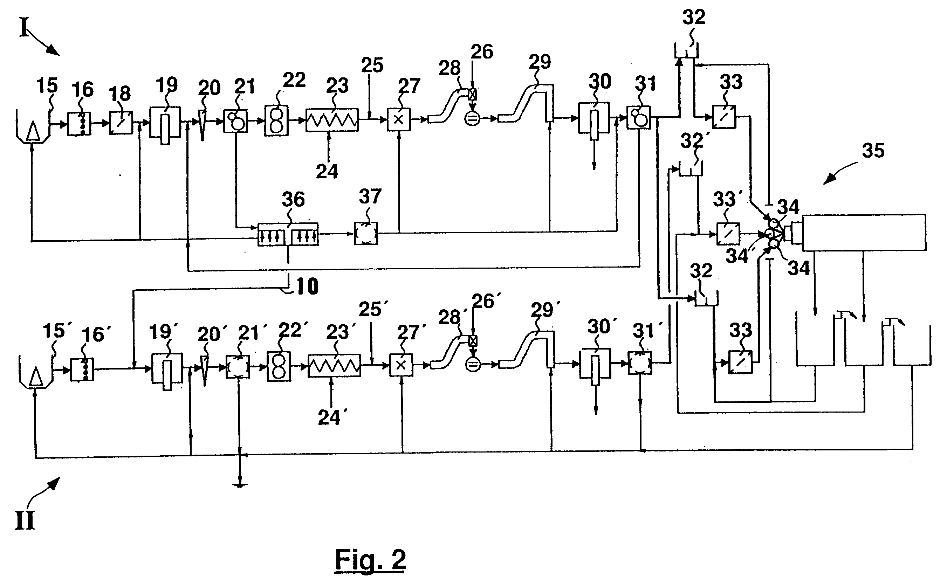

Fig. 2 zeigt das Beispiel einer konkret ausgestalteten vorteilhaften Aufbereitungsanlage mit den verfahrenstechnisch wichtigsten Maschinen. Zwei unterschiedliche Rohstoffe werden in getrennten Stofflösern 15 bzw. 15' aufgelöst und in Vorsortierern 16 bzw. 16' vom gröbsten Schmutz befreit. Nach ggfs. notwendigem Durchgang durch einen Sortierer 18 gelangen die Stoffe in Deinkingflotationsanlagen 19 bzw. 19', anschließend durch Cleaner 20 bzw. 20'; dann wird im Strang I der Stoff in einer Waschvorrichtung 21 von einem großen Teil der Füll- und Feinstoffe befreit. Diese werden ab- und einer Klärflotationsanlage 36 zugeleitet. Der Gutstoff aus der Waschvorrichtung 21 gelangt über eine Siebpresse 22 in eine mit Dampf 24 beheizte Heizschnecke 23 in eine Dispergiermaschine 27, die gleichzeitig als Bleichmischer fungiert, wozu Bleichmittel 25 zugegeben werden. Es folgen Bleichrohre 28, 29, ggfs. dort eine weitere Chemikalienzugabe 26. In der anschließenden Flotationsanlage 30 können ggfs. durch die Dispergierung erst frei gewordene Störstoffe entfernt werden. Eine nachfolgende Waschvorrichtung 31 dient ebenfalls der Entfernung von Füll- und Feinstoffen und aber auch der Erhöhung der Stoffdichte, die auf der Papiermaschine 35 benötigt wird. Hieraus gelangt der Stoff in den Niveaukasten 32, von dort in den KT-Sortierer 33 und in die Stoffauflauf-Kammer 34. Die bereits erwähnte Klärflotationsanlage 36 führt das geklärte Abwasser dem Strang I wieder zu, ggfs. über einen Feinfilter 37 zur Verdünnung nach der Dispergierung. Der aus der Klärflotation stammende Schlamm wird in den Strang II eingeleitet, wodurch hier eine Trennung der Wasserkreisläufe auf die Aufbereitungsstränge I und II erfolgt.

Auch der Strang II enthält, wie bereits erwähnt, anfangs eine Deinkingflotationsvorrichtung 19', darauf einen Cleaner 20'. Dem folgt ein Eindicker 21', welcher aufgrund seiner Filterwirkung einen großen Teil der Füll- und Feinstoffe im Faserstoff behält, während das vorgeklärte Abwasser zur Auflösung im Stofflöser 15' zurückführt, welches ggfs. noch etwas geklärt werden kann. Es folgt die Siebpresse 22', die Heizschnecke 23' mit Dampfzuleitung 24' und eine anschließende Bleiche mit Bleichmischer und Disperger 27' nach Chemikalienzuleitung 25'. Aus diesem Bleichmischer geht der Stoff in die Bleichrohre 28', 29' mit ggfs. weiterer Chemikalienzuleitung 26'. Nach der Bleiche erfolgt hier eine weitere Abtrennung von frei gewordenen Schmutzstoffen in einer selektiv arbeitenden Flotationszelle 30', anschließend die Eindickung im Eindicker 31', um einen Faserstoff zu erhalten, der in dem Niveaukasten 32' nach Art und Konsistenz geeignet ist, über einen KT-Sortierer 33' der Stoffauflauf-Kammer 34' zugeführt zu werden.

Die in den Stoffauflaufkammern 34 und 34' geführten Faserstoff-Sorten bilden auf der Papiermaschine 35 eine gemeinsame dreischichtige Bahn. Dabei fällt Siebwasser an, welches aus der Papiermaschine abgeleitet und dem Stofflöser 15' wieder zugeführt oder als sonstiges Verdünnungswasser verwendet wird. Das dreischichtige Blatt weist dann an den Außenseiten feinstoffärmere Schichten auf als weiter innen im Blatt.

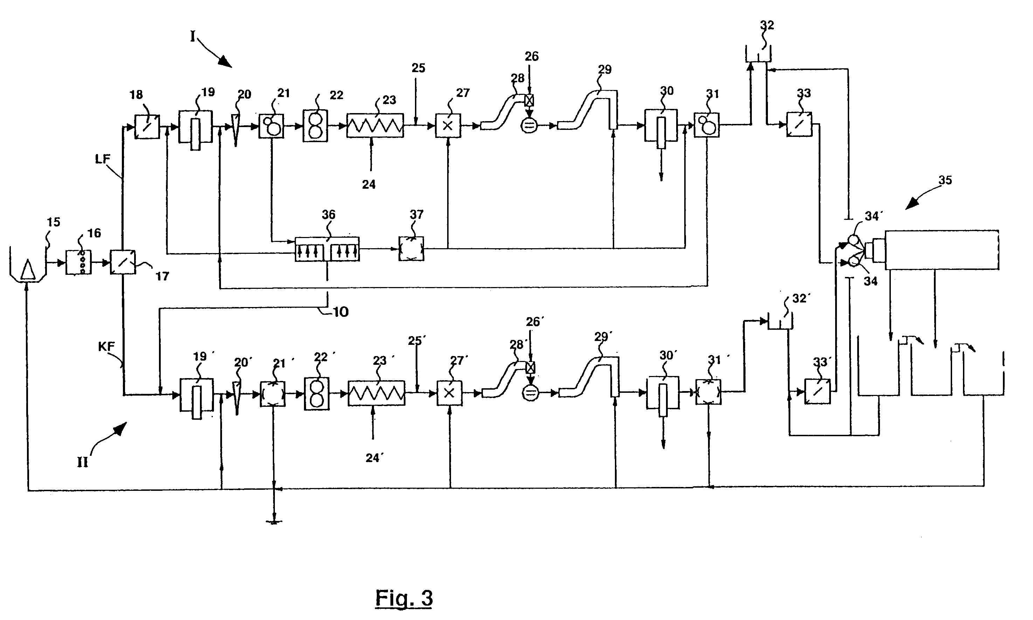

Fig. 3 zeigt eine Variante, bei der die Rohstoffe gemeinsam im Stofflöser 15 suspendiert, anschließend in einem Vorsortierer 16 vom gröbsten Schmutz gereinigt und in einer Fraktioniervorrichtung 17 in eine Langfaserfraktion LF und in eine Kurzfaserfraktion KF aufgeteilt und dann getrennt in den Strängen I bzw. II aufbereitet werden.

Als weitere Variante des Verfahrens zeigt die Figur 3 ferner die Verwendung des Faserstoffs in einem eine zweischichtige Lage bildenden Stoffauflauf, wobei die im Strang I aufbereitete Langfaserfraktion LF in die die siebnahe Schicht bildende Kammer 34' gelangt und die im Strang II aufbereitete Kurzfaserfraktion in die Kammer 34 des Stoffauflaufes. Das gebildete Blatt besitzt an der dem Sieb zugewandten Seite eine feinstoffärmere Schicht, da es aus der Sorte 1 gebildet wurde, was außerdem durch das Auswaschen in unmittelbarar Siebnähe noch verstärkt werden kann. Der aus der Sorte 2 gebildete Teil dieser Lage wird zur Blattmitte hin feinstoffreicher. Bei der Weiterverarbeitung können zwei so erzeugte Bahnen zusammengelegt werden und zwar unter Berührung der jeweils feinstoffreicheren Seiten. Dadurch ist die Haftung der beiden Lagen gut, und die beiden Außenseiten der Bahn haben faserigen Charakter, zwei besonders bei Hygiene- Papier geschätzte Eigenschaften.

Es sind auch andere Anwendungen des Verfahrens denkbar als in den Ansprüchen 11 bis 13 genannt, da je nach Anforderungen auch weitere Kombinationsmöglichkeiten der das erfindungsgemäße Verfahren ermöglichenden Schritte bestehen.

## Patentansprüche

1. Verfahren zur Aufbereitung von mehreren faserigen Ausgangsstoffen (A,B,...), von denen mindestens einer füll- und/oder feinstoffhaltig ist, welche Faserstoffe zur Erzeugung von mehrlagigem Papier oder Karton verwendet werden können, bei dem in den Randschichten ein geringerer Gehalt der aus dem Ausgangsstoff stammenden Füll- und/oder Feinstoffe vorliegt als in den weiter innen liegenden Schichten, bei welchem Verfahren mindestens zwei Sorten (1,2,...) von wässrigen Stoffsuspensionen für verschiedene Schichten des auf der Papiermaschine zu bildenden Blattes hergestellt werden, dadurch gekennzeichnet, daß bei Erzeugung einer Sorte (1) aus dem weniger füll- und/oder feinstoffhaltigen Ausgangsstoff (A) ein Waschverfahren angewendet wird, in dem der Faserstoff bezüglich seines Füll- und/oder Feinstoffgehalts verarmt wird, während bei Erzeugung einer anderen Sorte (2) aus dem höher füll- und/oder feinstoffhaltigen Ausgangsstoff (B) der dafür vorgesehene Faserstoff durch die mit dem in dem genannten Verfahrensschritt abgeschiedenen Füll- und/oder Feinstoff zumindest teilweise angereichert wird.

2. Verfahren nach Anspruch 1, dadurch gekennzeichnet, daß durch geeignete Maßnahmen die in der anderen Sorte (2) enthaltenen und angereicherten Füll- und Feinstoffe fixiert werden.

3. Verfahren nach Anspruch 1oder 2 zur Aufbereitung von insbesondere aus Altpapier gewonnenem Faserstoff, welcher in Wasser suspendiert und als mindestens eine langfaserreichere (LF)-Fraktion sowie mindestens eine kurzfaserreichere (KF)-Fraktion vorliegt, dadurch gekennzeichnet, daß die Langfaser-Fraktion LF als ein Ausgangsstoff (A) behandelt, dabei durch einen Waschvorgang an Füll- und/oder Feinstoffen verarmt und als eine Sorte (1) verwendet wird, während die Kurzfaser-Fraktion KF als anderer Ausgangsstoff (B) behandelt und mit Füll- und Feinstoffen zur anderen Sorte (2) angereichert wird.

4. Verfahren nach Anspruch 1, dadurch gekennzeichnet, daß die an Fein- und/oder Füllstoff zu verarmende Sorte (1) durch ein Waschverfahren von störenden, feinen Verunreinigungen befreit wird, wobei neben den feinen Verunreinigungen auch die Fein- und/oder Füllstoffe entfernt werden.

5. Verfahren nach Anspruch 1, dadurch gekennzeichnet, daß die mit Fein- und/oder Füllstoff anzureichernde Sorte (2) durch ein Flotationsdeinking- Verfahren von störenden, feinen Verunreinigungen befreit wird, wobei die Fein- und/oder Füllstoffe zu einem großen Teil im Faserstoff verbleiben.

6. Verfahren nach Anspruch 1, dadurch gekennzeichnet, daß für die Erzeugung jeweils einer Sorte (1,2,...) folgende Verfahrensschritte angewendet werden:
1. für eine feinstoffärmere Sorte (1):
1.1 Bereitstellung des Ausgangsstoffes (A) als wässrige Faserstoffsuspension
1.2 Entfernung (3) der Druckfarben und Störstoffe in einer Flotations- und/oder Waschstufe im neutralen oder alkalischen Bereich;
1.3 Zerkleinerung (4) und Ablösung (5) verbliebener, störender, nicht-faseriger Bestandteile durch Dispergierung bei gleichzeitiger Bleiche (6), wobei die Dispergiermaschine als Bleichmittel-Mischer verwendet wird und die Bleiche im Hochkonsistenzbereich mit Chemikalien (7) insbesondere mit Peroxid und/oder Natriumdithionit und/oder Formamidinsulfinsäure bei hoher Temperatur, insbesondere über 70° C, durchgeführt wird;
1.4 anschließende Entfernung (8) von erst durch die Dispergierung entfernbar gemachten Störstoffen mittels Flotation und/oder Wäsche im neutralen oder alkalischen Bereich;
1.5 Reinigung (9) der als Abwasser und/oder Schlamm abgeleiteten und verunreinigten Stoffströme mittels Klärflotation, insbesondere chemiekalienunterstützte Entspannungsflotation;
1.6 Abführung der verunreinigten sowie Fein- und Füllstoffe-haltigen Stoffströme aus diesem Aufbereitungsstrang;
2. für eine feinstoffreichere Sorte (2):
2.1 Bereitstellung des Ausgangsstoffes (B) als wässrige Faserstoffsuspension
2.2 Entfernung (3 ') der Druckfarben und Störstoffe in einer Flotationsanlage im neutralen oder alkalischen Bereich;
2.3 Zerkleinerung (4 ') und Ablösung (5 ') verbliebener, störender, nicht-faseriger Bestandteile durch Dispergierung bei gleichzeitiger Bleiche (6 '), wobei die Dispergiermaschine als Bleichmittel-Mischer verwendet wird und die Bleiche im Hochkonsistenzbereich mit Chemikalien (7 '), insbesondere mit Peroxid und/oder Natriumdithionit und/oder Formamidinsulfinsäure bei hoher Temperatur, insbesondere über 70° C, durchgeführt wird;
2.4 anschließende Entfernung (8 ') von erst durch die Dispergierung entfernbar gemachten Störstoffen mittels Flotation im neutralen oder alkalischen Bereich;
2.5 Zuleitung der, wie unter 1.6 beschrieben, anfallenden Stoffströme
2.6 Fixierung (11) der Füll- und Feinstoffe mit Hilfe chemischer Mittel (12), insbesondere Stärke, Leim oder Latex.

7. Verfahren nach Anspruch 1, dadurch gekennzeichnet, daß die Teilmenge, welche mit Füll- und/oder Feinstoffen angereichert abgeleitet wurde, um die eine Sorte (1) an diesen Stoffen zu verarmen, einem speziellen Reinigungsschritt unterzogen wird, in dem Füll- und Feinstoffe angereichert werden und dann in den für die andere Sorte (2) vorgesehenen Aufbereitungsabschnitt zugeleitet werden, wo es die andere Sorte (2) mit Füll- und Feinstoff anreichert.

8. Verfahren nach Anspruch 7, dadurch gekennzeichnet, daß der spezielle Reinigungsschritt in einem Klärflotationsapparat durchgeführt wird, dessen geklärtes Wasser in den Aufbereitungsstrang des Stoffes der an Fein- und/oder Füllstoff zu verarmenden Sorte (1) zugeführt wird.

9. Verfahren nach Anspruch 7, dadurch gekennzeichnet, daß der spezielle Reinigungsschritt in einem Sedimentationsapparat durchgeführt wird, dessen geklärtes Wasser in den Aufbereitungsstrang des Stoffes der an Fein- und/oder Füllstoff zu verarmenden Sorte (1) zugeführt wird.

10. Verfahren nach Anspruch 1, dadurch gekennzeichnet, daß eine weitestgehende Rückführung aller aus Stoffaufbereitung und Papiermaschine abgeführten wässrigen Teilströme, insbesondere Rückwasser- und Abwasserströme, durchgeführt wird, sowie eine Kreislaufentsalzung und erforderlichenfalls Entkeimung.

11. Verfahren nach Anspruch 1, dadurch gekennzeichnet, daß bereits vor der Herstellung einer wässrigen Suspension mindestens zwei verschiedene Faserstoffe vorliegen, die in dem Verfahren als Ausgangsfaserstoffe (A, B,...) eingesetzt und zumindest teilweise getrennt voneinander aufgelöst werden.

12. Verfahren nach Anspruch 11, dadurch gekennzeichnet, daß die bereits vor der Herstellung einer wässrigen Suspension vorliegenden verschiedenen Faserstoffe unterschiedlichen Gehalt an Füll- und/oder Feinstoffen haben und daß der füllstoffreichere Ausgangsstoff zur füllstoffreicheren Sorte (2) aufbereitet wird.

13. Verfahren nach Anspruch 1, dadurch gekennzeichnet, daß auf der Papiermaschine zwei Lagen erzeugt werden mit je zwei Schichten, wobei die dem Papiermaschinensieb nähere Schicht aus der feinstoffärmeren Sorten (1) gebildet und von der feinststoffreicheren Sorte (2) abgedeckt wird, wonach zwei Lagen zur Bildung einer Papier- oder Kartonbahn in einem weiteren Vorgang so zusammengefügt werden, daß die aus den feinstoffreicheren Sorten gebildeten Schichten einander berühren.

## Claims

1. A method of preparing a plurality of fibrous starting materials (A,B,...), at least one of which contains fillers and/or fines, which fibre materials may be used to produce multi-ply paper or cardboard, in which a lower content of the fillers and/or fines originating from the starting material is present in the edge layers than in the layers lying further inwards, with which method at least two types (1,2,...) of aqueous pulp suspensions are produced for different layers of the sheet to be formed on the paper machine, characterized in that during production of one type (1) from the starting material (A) of lower filler and/or fines content a washing process is used in which the filler and/or fines content of the fibre material is depleted, while during production of another type (2) from the starting material (B) of higher filler and/or fines content the fibre material provided therefor is at least partially enriched by the fillers and/or fines separated in the above-mentioned method step.

2. A method according to claim 1, characterized in that, by suitable measures, the fillers and fines contained and increased in the other type (2) are fixed.

3. A method according to claim 1 or claim 2 for preparing in particular fibre material recovered from old paper, which fibre material is present in suspension in water and as at least one long fibre-richer (LF) fraction and at least one short fibre-richer (KF) fraction, characterized in that the long fibre fraction LF is treated as a starting material (A) and thus diminished in fillers and/or fines by a washing process and used as a type (1), while the short fibre fraction KF is treated as a different starting material (B) and enriched with fillers and fines to form the other type (2).

4. A method according to claim 1, characterized in that the type (1) to have its fines and/or filler content reduced is freed by a washing process from disturbing fine impurities, fines and/or fillers also being removed as well as the fine impurities.

5. A method according to claim 1, characterized in that the type (2) to be enriched with fines and/or fillers is freed from disturbing fine impurities by a flotation de-inking process, the fines and/or fillers remaining for the most part in the fibre material.

6. A method according to claim 1, characterized in that for the production of the respecctive types (1,2,...) the following method steps are used:
1. for a type (1) of lower fines content:
1.1 preparation of the starting material (A) as aqueous fibre material suspension
1.2 removal (3) of printing inks and disturbing substances in a flotation and/or washing stage in the neutral or alkaline range;
1.3 comminution (4) and separation (5) of remaining, disturbing, non-fibrous components by dispersal with simultaneous bleaching (6), the dispersing machine being used as a bleaching agent mixer and bleaching being effected in the high consistency range with chemicals (7), especially with peroxide and/or sodium dithionite and/or formamidine sulphinic acid at high temperature, especially over 70°C;
1.4 subsequent removal (8) of disturbing substances, only made removable by said dispersal, by means of flotation and/or washing in the neutral or alkaline range;
1.5 cleaning (9) of the impure stock flows drawn off as waste water and/or sludge by means of clearing flotation, especially chemically supported expansion flotation;
1.6 discharge of the impure, fines- and filler-containing stock flows out of this preparation run;
2. for a fines-richer type (2):
2.1 preparation of the starting material (B) as aqueous fibre material suspension
2.2 removal (3') of the printing inks and disturbing substances in a flotation installation in the neutral or alkaline range;
2.3 comminution (4') and separation (5') of remaining, disturbing, non-fibrous components by dispersal with simultaneous bleaching (6'), the dispersing machine being used as a bleaching agent mixer and bleaching being effected in the high consistency range with chemicals (7'), especially with peroxide and/or sodium dithionite and/or formamidine sulphinic acid at high temperature, especially over 70°C;
2.4 subsequent removal (8') of disturbing substances, only made removable by said dispersal, by means of flotation in the neutral or alkaline range;
2.5 supply of the stock flows arising, as described under 1.6
2.6 fixing (11) of the fillers and fines with the aid of chemical agents (12), especially starch, size or latex.

7. A method according to claim 1, characterized in that the partial quantity, which is drawn off enriched with fillers and/or fines in order to deplete the content of these substances in the one type (1), is subjected to a special cleaning step in which fillers and fines are enriched and then conveyed to the preparation section provided for the other type (2), where it enriches the other type (2) with fillers and fines.

8. A method according to claim 7, characterized in that the special cleaning step is effected in a clearing flotation apparatus, whose clarified water is supplied to the preparation run of the material of type (1) to be depleted of fines and/or fillers.

9. A method according to claim 7, characterized in that the special cleaning step is effected in a sedimentation appaaratus, whose clarified water is conveyed to the preparation run of the material of type (1) to be depleted of fines and/or fillers.

10. A method according to claim 1, characterized in that a most extensive feedback of all aqueous partial flows drained from material preparation and paper machine, especially white water and waste water flows, is effected, as well as circulatory desalination and, if necessary, sterilization.

11. A method according to claim 1, characterized in that, even before the production of an aqueous suspension, at least two different fibre materials are present, which are used in the method as starting fibre materials (A,B,...) and dissolved at least partially separately from each other.

12. A method according to claim 11, characterized in that the different fibre materials present even before production of an aqueous suspension have differing filler and/or fines contents and in that the filler-richer starting material is prepared to form the filler-richer type (2).

13. A method according to claim 1, characterized in that two plies are generated on the paper machine, each with two layers, the layer nearer the paper machine wire being formed of the fines-poorer type (1) and being covered by the fines-richer type (2), whereupon two plies are so assembled in a further process to form a paper or cardboard web that the layers formed of the fines-richer types are in contact with each other.

## Revendications

1. Procédé de préparation de plusieurs matières premières fibreuses (A, B, ...), dont une au moins contient des charges et/ou des fines, lesquelles matières fibreuses peuvent être utilisées pour la production de papier ou de carton à plusieurs couches, dans lequel on a, dans les couches de bordure, une teneur en charges et/ou matière fines provenant de la matière première, inférieure à celle des couches situées plus à l'intérieur, dans lequel procédé sont fabriqués au moins deux types (1, 2, ...), de suspensions aqueuses de matières pour différentes couches de la feuille à former sur la machine à papier, caractérisé en ce que lors de la production d'un type (1) à partir de la matière première (A) contenant moins de charges et/ou de fines, on applique un procédé de lavage dans lequel la teneur en charges et/ou fines de la matière fibreuse est réduite, tandis que lors de la production d'un autre type (2) à partir de la matière première (B) contenant plus de charges et/ou fines, la matière fibreuse prévue à cet effet est enrichie au moins en partie avec les charges et/ou les fines séparées au cours de l'étape de procédé citée.

2. Procédé selon la revendication 1, caractérisé en ce que les charges et fines contenues dans l'autre type (2) et enrichies sont fixées par des moyens appropriés.

3. Procédé selon la revendication 1 ou 2 de préparation d'une matière fibreuse obtenue en particulier à partir de vieux papiers, qui est en suspension dans l'eau et qui se présente sous la forme d'au moins une fraction enrichie en longues fibres (LF) ainsi qu'au moins une fraction enrichie en fibres courtes (KF), caractérisé en ce que la fraction à longues fibres (LF) est traitée en tant que matière première (A), en tant que telle appauvrie par une opération de lavage en charges et/ou fines et est utilisée comme un type (1), tandis que la fraction à fibres courtes (KF) est traitée comme autre matière première (B) et est enrichie en charges et fines pour l'autre type (2).

4. Procédé selon la revendication 1, caractérisé en ce que le type (1) appauvri en fines et/ou charges est débarrassé, par un procédé de lavage, des impuretés fines et gênantes, les fines et/ou charges étant éliminées aussi en plus des impuretés fines.

5. Procédé selon la revendication 1, caractérisé en ce que le type (2) enrichi en fines et/ou charges est débarrassé des impuretés fines et gênantes par un procédé de désencrage par flottation, les fines et/ou charges restant en grande partie dans la matière fibreuse.

6. Procédé selon la revendication 1, caractérisé en ce que pour la production d'un type (1, 2, ...), on applique les étages de procédé suivantes :
1.pour un type (1) plus pauvre en fines :
1.1 préparation de la matière première (A) en tant que matière fibreuse en suspension aqueuse ;
1.2 élimination (3) des encres d'impression et matières gênantes dans une étape de flottation et/ou de lavage dans un milieu neutre ou alcalin ;
1.3 fragmentation (4) et séparation des composants restants, gênants, non fibreux par dispersion et blanchiment (6) simultané, la machine de dispersion étant utilisée comme malaxeur d'agent de blanchiment et le blanchiment étant exécuté dans le domaine hautement consistant avec des produits chimiques (7) en particulier du péroxyde et/ou de l'hydrosulfide de sodium et/ou de l'acide sulfinique de formamidine FAS à haute température, en particulier à plus de 70 °C ;
1.4 élimination (8) consécutive des matières gênantes rendues éliminables après dispersion seulement, par flottation et/ou lavage dans le domaine neutre ou alcalin ;
1.5 épuration (9) des matières gênantes polluées et évacuées sous forme d'eaux usées et/ou de boues par flottation de clarification, en particulier flottation de détente favorisée par des produits chimiques ;
1.6 évacuation de cette ligne de préparation des matières gênantes polluées ainsi que celles contenant des fines et des charges ;
2.Pour un type (2) plus riche en fines :
2.1 préparation de la matière première (B) en tant que matière fibreuse en suspension aqueuse ;
2.2 élimination (3') des encres d'impression et matières gênantes dans une étape de flottation et/ou de lavage dans un milieu neutre ou alcalin ;
2.3 fragmentation (4') et séparation des composants restants, gênants, non fibreux par dispersion et blanchiment (6') simultané, la machine de dispersion étant utilisée comme malaxeur d'agent de blanchiment et le blanchiment étant exécuté dans le domaine hautement consistant avec des produits chimiques (7') en particulier du péroxyde et/ou de l'hydrosulfide de sodium et/ou de l'acide sulfinique de formamidine FAS à haute température, en particulier à plus de 70 °C ;
2.4 élimination (8') consécutive des matières gênantes rendues éliminables après dispersion seulement, par flottation et/ou lavage dans le domaine neutre ou alcalin ;
2.5 acheminement des matières gênantes produites, comme décrit au point 1.6 ;
2.6 fixation (11) des charges et fines à l'aide de produits chimiques (12), en particulier d'amidon, de colle ou de latex.

7. Procédé selon la revendication 1, caractérisé en ce que la quantité partielle qui a été éliminée, enrichie en charges et/ou fines, pour appauvrir un type (1) dans ces matières, est soumise à une étape d'épuration spéciale au cours de laquelle les charges et fines sont enrichies et sont envoyées ensuite dans le secteur de préparation prévu pour l'autre type (2), où l'autre type (2) est enrichi en charges et matières finies.

8. Procédé selon la revendication 7, caractérisé en ce que l'étape d'épuration spéciale est réalisée dans un appareil de flottation de clarification, dont l'eau clarifiée est envoyée dans la ligne de préparation de la matière du type (1) à appauvrir en fines et/ou charges.

9. Procédé selon la revendication 7, caractérisé en ce que l'étape d'épuration spéciale est réalisée dans un appareil de sédimentation dont l'eau clarifiée est envoyée dans la ligne de préparation de la matière de type (1) à appauvrir en fines et/ou charges.

10. Procédé selon la revendication 1, caractérisé en ce qu'il est réalisé un très large recyclage de tous les courants partiels aqueux, évacués de la préparation des matières et de la machine à papier, en particulier les courants d'eau de recyclage et d'eaux usées, ainsi qu'à un dessalage du circuit et si nécessaire à une décontamination.

11. Procédé selon la revendication 1, caractérisé en ce que dès avant la préparation d'une suspension aqueuse on est en présence d'au moins deux matières fibreuses différentes qui sont utilisées dans le procédé comme matières fibreuses premières (A, B, ...) et sont dissoutes au moins partiellement, séparément l'une de l'autre.

12. Procédé selon la revendication 11, caractérisé en ce que les différentes matières fibreuses existant dès avant la préparation d'une suspension aqueuse, ont une teneur différente en charges et/ou fines et en ce que la matière première plus riche en charges est traitée pour obtenir le type (2) plus riche en charges.

13. Procédé selon la revendication 1, caractérisé en ce que sur la machine à papier sont produits deux plis avec chacun deux couches faites de différents types (1, 2) préparés suivant ce procédé, la couche la plus proche du filtre de la machine à papier étant formée par le type (1) plus pauvre en fines et recouverte par le type (2) plus riche en fines, deux plis étant assemblés au cours d'une autre opération, pour former une bande de papier ou de carton, de manière que les couches formées par les types plus riches en fines, se touchent l'une l'autre.
